# EUROPÄISCHE PATENTSCHRIFT

(11) **EP 0 978 715 B1**
(45) Veröffentlichungstag und Bekanntmachung des Hinweises auf die Patenterteilung: **26.03.2003**
(21) Anmeldenummer: 99114070.8
(22) Anmeldetag: 20.07.1999
(51) Int. Cl.: G01M 3/04, G01K 11/32, F17D 5/00, G02B 6/44, G02B 6/50

(54) **Überwachung und Nachrichtenübermittlung in Rohren durch Verbundglasfaserkabel und deren Verlegung**
Monitoring and communication in pipings with multiple fiber cables and the positioning thereof
Surveillance et communication dans des tuyaux par des câbles multiples de fibres et leur mise en place

(30) Priorität: 03.08.1998 DE 19834996; 29.09.1998 DE 19844753
(43) Veröffentlichungstag der Anmeldung: 09.02.2000
(73) Patentinhaber: AVU Aktiengesellschaft für Versorgungsunternehmen, 58285 Gevelsberg (DE)
(72) Erfinder: Sander, Hansjörg, Dipl.-Ing., 45525 Hattingen (DE); Jonasson, Günter, Dipl.-Ing., 58300 Wetter/Ruhr (DE); Kühn, Katrin, Dipl.-Math., 07743 Jena (DE); Grosswig, Stephan, Dr. rer. nat. Dipl.-Phys., 07749 Jena (DE)
(74) Vertreter: Kruspig, Volkmar, Dipl.-Ing.

(56) Entgegenhaltungen:
- EP-B- 0 294 243
- DE-U- 29 806 732
- DE-U- 29 811 737
- GB-A- 2 119 949
- JP-A- 59 178 413
- US-A- 4 654 520
- US-A- 4 756 510

## Beschreibung

Die Erfindung betrifft eine Vorrichtung zum Überwachen des Zustands von Rohren, Rohrsystemen, Pipelines oder der gleichen Gas oder flüssige Medien führenden Einrichtungen, ein entsprechendes Verfahren sowie eine entsprechende Verwendung einer Einrichtung.

Aus der DE 195 09 129 C2 ist ein Verfahren und eine Vorrichtung zur Kontrolle und Überwachung des Zustands von Rohren, Behältern, Pipelines oder dergleichen durch Feststellen der Umgebungstemperaturverteilung bekannt.

Die dort vorgeschlagene Lösung greift auf langgestreckte, faseroptischen Temperatursensoren zur verteilten Temperaturmessung zurück, wobei diese faseroptischen Sensoren über Abschnitte längs und/oder umfangsmäßig und/oder dem Bodenbereich nahe bei den zu überwachenden Rohren, jedoch außerhalb des von diesen umschlossenen Medienraums angeordnet sind.

Bei festgestellter örtlicher Anomalie in der Temperaturverteilung kann auf eine Leckage des zu überwachenden Rohrs, Behälters oder dergleichen geschlossen werden.

Das an sich bekannte faseroptische Sensorkabel kann innerhalb eines Rohrgrabens oder einer Rohrbrücke längs des Rohrs an der Außenoberfläche angeordnet werden oder es besteht die Möglichkeit, das Kabel beabstandet parallel zum Rohr verlaufend zu fixieren. Mit dem bekannten Verfahren und der zugehörigen Vorrichtung kann auch ein Rohrsystem überwacht werden, welches zum Transport gasförmiger, unter Druck stehender Medien dient, wenn beim Austreten des unter Druck befindlichen Gases aufgrund der plötzlichen Expansion in der Nähe des Gasaustritts eine lokale Temperaturänderung eintritt, ansonsten aber die Medientemperatur nahezu auf dem Temperaturniveau der Umgebung liegt.

Das Anordnen des faseroptischen Sensorkabels außerhalb der eigentlichen Rohre, Behälter oder Pipelines erfordert jedoch insbesondere beim Nachrüsten nicht unerhebliche Tiefbauarbeiten und daher zusätzliche, teilweise nicht vertretbare Kosten.

Weiterhin wurde bereits vorgeschlagen, einen langgestreckten Temperatursensor in Form eines faseroptischen Kabels mittels eines Rohrmolchs in das Innere einer Abwasserleitung einzuführen und zu verlegen. Ziel ist es, bei einer derartigen Anordnung im Rohrinnern festzustellen, ob durch Risse oder sonstige Undichtigkeiten im Abwasserkanal Grundwasser von außen eindringt, um gezielt Sanierungen vorzunehmen. Hierbei wird auf die unterschiedliche Temperatur von Grundwasser einerseits und abzuführendem Abwasser andererseits abgestellt. Grundsätzlich befindet sich jedoch das faseroptische Sensorkabel in einem druckfreien Raum, um definierte Bedingungen zur Temperatursensorik gestützt auf das DTS-Meßverfahren (Distributed Optical Fiber Temperature Sensing) zu schaffen.

Bezüglich der DTS-Meßtechnik sei auf das deutsche Gebrauchsmuster G 93 18 404 verwiesen.

Demnach wird auswerteseitig auf rückgestreutes Raman-Streulicht eines Lichtwellenleiters Bezug genommen. Eingestrahltes Laserlicht breitet sich innerhalb des Lichtwellenleiters, d.h. der Faseroptik aus und es erfolgt eine Streuung an den Molekülen des Lichtwellenleiters, wobei die Intensität des rückgestreuten Lichts in Abhängigkeit von der Laufzeit in vorgegebenem Maße abfällt.

Aufgrund der bekannten Ausbreitungsgeschwindigkeit des emittierten Lichts im Lichtwellenleiter kann aus dem ermittelten zeitlichen Verlauf der Intensität des Rückstreulichts der vom Licht jeweils zurückgelegte Weg bestimmt werden. Bedingt durch die Wechselwirkungen des Laserlichts mit optischen Phononen, d.h. Schwingungsquanten einer elastischen Deformationswelle in einem Festkörper, entsteht die erwähnte Raman-Rückstreuung. Die Intensität des Raman-Rückstreulichts ist direkt von der Temperatur am jeweiligen Ort der Entstehung des Streulichts abhängig. In dem Fall, wenn das Laserlicht in den Lichtwellenleiter eingekoppelt und die Intensität des Raman-Streulichts laufzeitabhängig ausgewertet wird, kann eine ortsabhängige Temperaturverteilung ermittelt werden.

Die weiterhin bekannt gewordenen Verfahren zur Feststellung von Temperaturanomalien gemäß EP 0 555 846 A2 oder JP 4-168 335 gehen von längs einer Pipeline oder einer wasserführenden Leitung angeordneten faseroptischen Kabeln aus, wobei grundsätzlich auf einen Temperaturunterschied zwischen Medium und einer Untergrund- bzw. Umgebungstemperatur abgestellt wird.

Darüber hinaus befinden sich bei allen bekannt gewordenen technischen Lösungen die faseroptischen Sensorkabel im druckfreien Raum, um eine erwartete negative Beeinflussung des Raman-Rückstreuverhaltens zu vermeiden.

Mit Fortfall des bisherigen Monopols der Deutschen Post AG bzw. der Telekom agieren neue Netzbetreiber am Markt. Der Aufbau kabelgebundener Nachrichtenübertragungsanlagen hoher Leistungsfähigkeit erfordert jedoch das Erstellen von entsprechenden Leitungsnetzen. Es hat sich gezeigt, daß ein Großteil der Errichtungskosten auf die passiven Kabelanlagen entfallen bzw. auf die notwendigen aufzubauenden Trassen und die Kabelverlegung.

Da andererseits sowohl im innerstädtischen, aber auch im Überlandbereich gerade in dicht besiedelten Gebieten eine Vielzahl von Rohrleitungen vorhanden ist, wurde die Möglichkeit genutzt, Telekommunikationskabel beispielsweise in unter Druck stehenden Brauch- oder Trinkwasserleitungen einzuziehen. Aufwendige Grabungsarbeiten können entfallen. Eine wechselseitige Beeinflussung von Kabel und Rohrleitung ist dadurch ausgeschlossen, daß auf Monomode-Lichtwellenleiter (LWL) zurückgegriffen wird.

Grundsätzlich besteht die Möglichkeit, derartige LWL-Kabel auch in Hochdruck-Gastransportrohren oder -rohrsystemen bzw. Gasleitungen und Gasrohrnetzen anzuordnen, um den Aufbau kabelgebundener breitbandiger Nachrichtenübertragungsnetze mit geringeren Kosten zu fördern.

Aus dem Vorgenannten ist es Aufgabe der Erfindung, eine Vorrichtung zum Überwachen des Zustands von Rohren, Rohrsystemen, Pipelines oder dergleichen Gas oder flüssige Medien führenden Einrichtungen anzugeben, wobei die Medien unter hohem Druck stehen. Weiterhin soll die Vorrichtung durch multivalente Nutzungsmöglichkeiten für den Betreiber der Rohrsysteme kostenseitig attraktiv werden, wobei mindestens teilweise auf bekannte und erprobte Techniken zurückzugreifen ist.
Darüber hinaus soll ein Verfahren zum Verlegen einer speziellen Kabel-Verbundanordnung für die Zustandsüberwachungsvorrichtung angegeben und eine zugehörige Verlegeeinrichtung geschaffen werden, so daß eine notwendige Unterbrechung der Medienversorgung auf ein minimales Maß beschränkt werden kann und gleichzeitig allen Sicherheitsaspekten beim Betreiben Rechnung getragen wird.

Die Lösung der Aufgabe der Erfindung erfolgt mit den Merkmalen des Patentanspruchs 1. Ein entsprechendes Verfahren ist im Anspruch 8 angegeben, und eine entsprechende Verwendung im Anspruch 11, wobei die Unteransprüche jeweils mindestens zweckmäßige Ausgestaltungen und Weiterbildungen umfassen.

Der Grundgedanke der Erfindung liegt nun darin, ein spezielles Verbund-Lichtwellenleiterkabel im Innern eines Rohrsystems, das unter hohem Druck stehende Medien führt, anzuordnen, wobei das Verbundkabel sowohl der Überwachung des Temperaturverlaufs und damit der Leckagekontrolle als auch der Nachrichtenübertragung innerhalb eines Telekommunikationsnetzes dient. Überraschenderweise hat sich gezeigt, daß die im Rohrinnern wirkenden Drücke die Laufzeit- und Intensitätsauswertung des rückgestreuten Lichts zur Erfassung örtlicher Temperaturanomalien längs des Sensorkabels nicht negativ beeinflussen. Gleiches gilt für die punktuell einwirkenden hohen Druck- und Preßkräfte im Bereich der Kabelein- und -ausführstutzen.

Das Verbundkabel selbst weist eine ausgezeichnete Langzeitstabilität und Medienbeständigkeit auf, wobei trotz vorgesehener notwendiger Umhüllungen die Selektivität und die Temperatur sowie Ortsauflösung nicht nennenswert eingeschränkt wird.

Das erfindungsgemäße Verbundkabel umfaßt mindestens ein faseroptisches, mit Laserlicht beaufschlagtes Multimode-Lichtwellenleiter-Sensorkabel sowie mindestens ein Monomode-Lichtwellenleiterkabel zur Nachrichtenübertragung.
Die Kabel sind zur Bildung des Verbunds ummantelt und mit einem im Verbund befindlichen Stauch- und Zugelement versehen.

Die Überwachungsvorrichtung, welche darüber hinaus zur Nachrichtenübertragung oder Telekommunikation unter Nutzung des Verbundkabels dient, nutzt an sich bekannte Mittel zur Laufzeit- und Intensitätsauswertung des rückgestreuten Laserlichts, um örtliche Temperaturanomalien längs des Sensorkabels und damit des Rohrsystems zu bestimmen. Die Kabel-Verbundanordnung wird über druckdichte Ein- und Ausführstutzen überwiegend im Innern der Rohre oder des Rohrsystems verlegt.

Gemäß einer Ausführungsform der Erfindung weist die Kabel-Verbundanordnung mindestens eine Bündelader mit Multimodefasern sowie mehrere Bündeladern mit einer Vielzahl von Monomodefasern auf, wobei diese Bündel um das zentral angeordnete Stauch- und Zugelement angeordnet sind. Eine Seelenumwicklung und ein Mantel umgeben die Bündelanordnung, wobei der Mantel vorzugsweise aus einem kunststoffbeschichteten Metallband besteht.

Besonders bevorzugt wird als Kunststoffbeschichtung Polyethylen und als Metallmaterial Aluminium eingesetzt. Das Stauch- und Zugelement besteht bevorzugt aus einem glasfaserverstärktem Kunststoff hoher Festigkeit.

Die speziellen Ein- und Ausführstutzen besitzen je einen sich in zur Rohrlängsrrichtung jeweils senkrecht erstreckenden Aufschweißstutzen, wobei am Aufschweißstutzen ein seitlicher Abgang zur Verbundkabelführung angeordnet oder integral mit diesem ausgebildet ist. Der Aufschweißstutzen ist auf den Durchmesser einer Verlegeeinrichtung ausgerichtet. Regelmäßig ist der Durchmesser des Aufschweißstutzens jedoch kleiner als der Durchmesser des Medientransportrohrs. Der Querschnitt oder der Durchmesser des seitlichen Abgangs ist am Kabeldurchmesser sowie den erforderlichen Dichtmitteln orientiert.

Als Dichtmittel kommt eine Preß- oder Quetschdichtung zur Anwendung, welche auf Verbundkabel und Abgangsinnenwandung durch Einspannung resultierende, axial gerichtete Kräfte erzeugt.
Die radialen und/oder axialen Anpreßkräfte des Dichtelements auf das Kabel führen in Verbindung mit der gewählten Verbundkonstruktion nicht zu einer mechanischen oder optischen Beeinträchtigung, so daß insbesondere die Dämpfungs- und Dispersionswerte des Sensorkabels keiner Verschlechterung unterliegen.

Da weder Kabeldeformationen vorliegen, noch negative Veränderungen der faseroptischen Eigenschaften beim Anordnen des Verbundkabels im Medienraum die Folge sind, kann mit einer üblichen Anzahl von Repeatern eine Nachrichtenübertragung mit hoher Datenrate erfolgen und es ist mit dem einmal eingezogenen Verbundkabel auf Dauer eine Zustands- und Leckagekontrolle bzw. - überwachung möglich.

Gemäß dem verfahrensseitigen Grundgedanken der Erfindung werden für das Verlegen einer Kabel-Verbundanordnung zunächst Rohrabschnitte freigelegt und Aufschweißstutzen befestigt. Im Anschluß hieran erfolgt ein Absenken des Betriebsdrucks im Rohrinneren und ein Anbohren des Rohrs über die Aufschweißstutzen.

Nach dem Sperren des Rohrs auf der Verbundkabel-Einzugslänge wird ein Ausblasen und im wesentlichen Drucklosmachen des abgesperrten Rohrs vorgenommen.

Die Verlegeeinrichtung wird über die Öffnung eines Aufschweißstutzens eingeführt und es wird eine Verbindung der Verlegeeinrichtung mit dem Verbundkabel, welches über den seitlichen Abgang zugeführt wird, hergestellt oder es wird an der Verlegeeinrichtung ein Zugseil befestigt.

Die Aufschweißstutzen werden nunmehr vorläufig abgedichtet und es wird der Betriebsdruck im Rohr zur Steuerung der Einzugsgeschwindigkeit bzw. der Bewegungsgeschwindigkeit der Verlegeeinrichtung erhöht. Die Verlegeeinrichtung wird vom strömenden Medium mitgenommen.

Das Ausführen des Kabels und die Entnahme der Verlegeeinrichtung erfolgt dann am nächsten in Strömungsrichtung befindlichen Aufschweißstutzen bzw. dem dort vorhandenen seitlichen Abgang.

Nach dem Kabeleinzug wird dann ein endgültiges Abdichten der Aufschweißstutzen durch Verschweißen mit einem Deckel einerseits und der seitlichen Abgänge zur Kabeldurchführung mit Hilfe spezieller Dichtmittel andererseits vorgenommen.

Für das vorläufige Abdichten der Aufschweißstutzen wird auf einen Blindflansch, welcher leicht montier- und demontierbar ist, zurückgegriffen. Die Dichtmittel für die Kabeldurchführung an den seitlichen Abgängen umfassen ein elastisches Dichtungsmaterial, metallische Preßringe und hochfeste Arretierschrauben. Der Dichteffekt selbst wird durch Druckeinwirkung der Arretierschrauben auf Stütz- und Druckringe und somit mittelbar auf die Dichtung bzw. das Dichtmaterial vorgenommen. Die Dichtungen werden gleichzeitig sowohl gegen die Innenwand der seitlichen Abgänge als auch die Kabelmanteloberfläche angepreßt. Vorzugsweise kommt als Dichtungsmaterial EPDM (Ethylen-Propylen-Dien-Kautschuk) zum Einsatz, wobei sich dieses Material durch besondere chemische Beständigkeit und hohe thermische sowie mechanische Belastbarkeit auszeichnet.

Bedingt durch die Anordnung der Aufschweißstutzen im wesentlichen senkrecht zur Rohrlängsrichtung und im unterschiedlichen Durchmesser von Stutzen und Rohrsystem, aber auch Durchmesseränderungen im Rohrsystem selbst macht sich der Einsatz einer besonderen Verlegeeinrichtung erforderlich.

Erfindungsgemäß wird ein spezieller Rohrmolch geschaffen, welcher nach Art einer flexiblen, schirmförmigen Tasche ausgebildet ist, welche im Innern sich in Längsrichtung erstreckend angeordnete Federelemente aufweist.
Die Federelemente erzeugen radial nach außen gerichtete Vorspannkräfte, so daß mindestens die Außenseite der Tasche an der Rohrinnenwandung abdichtend anliegt. An der Tasche sind Zugmittel zum Befestigen des Verbundkabels oder eines Zugseils vorhanden.

Das Taschenmaterial selbst besteht aus einem nachgiebigen Textilgewebe, Leder, Kunstleder oder einer Kunststofffolie.

Die offene Taschenseite wird nach dem Einbringen der Einrichtung über die Aufschweißstutzen in das Rohrinnere vom strömenden Medium beaufschlagt und wölbt sich dabei auf. Hierdurch stellt sich die gewünschte Abdichtung zur Rohrinnenwandung ein. Unter Überwindung der Reibungskräfte kann sich dann die Einrichtung vom Druck des strömenden Mediums abhängig auch bei Durchmesseränderungen des Rohrs im Rohrinneren in Längsrichtung fortbewegen. Die schirmförmige Tasche folgt durch die Federelemente Durchmesseränderungen. Beschädigungen durch Querschweißnähte oder dergleichen sind durch die nachgiebige Konstruktion in Verbindung mit einer entsprechenden Materialauswahl des Schirms bzw. der Tasche vermeidbar.

Die erfindungsgemäße Verlegeeinrichtung kann problemlos erwartete Unebenheiten beim Durchlaufen der Rohrstränge ausgleichen und wird durch derartige Querschnittsänderungen in ihrer Fortbewegung nicht maßgeblich beeinflußt. Darüber hinaus kann die Verlegeeinrichtung auch über einen senkrecht angeordneten Aufschweißstutzen in das Rohrinnere verbracht werden. Die flexible schirmförmige Tasche kann durch den einen kleineren Durchmesser bezogen auf den Rohrdurchmesser aufweisenden Aufschweißstutzen ohne Beschädigungen hindurchbewegt und mit dem Zugseil oder der Kabelanordnung verbunden werden.

In einer Ausgestaltung besteht die Möglichkeit, im Aufschweißstutzen eine Führungsrolle so zu befestigen, daß das einzuziehende Hilfsseil bzw. die Kabel-Verbundanordnung nicht mit Schweißnähten oder Kanten in Berührung kommt und hierdurch beschädigt wird.

Es hat sich gezeigt, daß mit Hilfe der Verlegeeinrichtung und der vorgestellten speziellen Verlegetechnologie zügig und ohne nennenswerte längere Beeinflussung der Medienversorgung auch größere Abschnitte schieberfreier Gasrohrstrecken mit Verbundkabeln nachgerüstet werden können.
Zur Verkürzung der Sperrzeiten kann auf Hilfs- oder Zugseile verzichtet werden, wobei hier ein unmittelbares Einziehen des mechanisch in sich sehr stabilen Verbundkabels erfolgt.

Die in der Verbundanordnung befindlichen faseroptischen Temperatursensorkabel unterliegen trotz der Hochdruckumgebung keiner signifikanten Beeinträchtung der Eigenschaften, die für die hochaufgelöste Temperaturmessung wesentlich sind.

Trotz der durch die Einzugstechnik und medienbedingte Ausführung der Verbundanordnung mit Ummantelung und dergleichen können Änderungen in der Temperaturverteilung signifikant erfaßt werden. Damit ist die faseroptische Temperaturmeßtechnik auch zur Ortung von Leckagen in Pipelines geeignet, welche Hochdruck-Medien führen. Die Kabel-Verbundanordnung, welche sowohl die Versorgungsunternehmen von Überwachungsaufgaben entlastet als auch zum Aufbau von Nachrichtennetzen genutzt werden kann, ermöglicht wesentliche Kostenvorteile und führt zu neuen Einsatzgebieten und Applikationen.

Die Erfindung soll nachstehend anhand eines Ausführungsbeispiels sowie unter Zuhilfenahme von Figuren näher erläutert werden.

Hierbei zeigen:
- Fig. 1: den Querschnitt der Verbundkabelanordnung;
- Fig. 2: eine Schnittdarstellung des Ein- und Ausführstutzens ;
- Fig. 3: den Ausgangszustand der Temperaturverteilung entlang einer Hochdruck-Gaspipeline;
- Fig. 4: eine Detaildarstellung eines Abschnitts der Pipeline mit Temperaturverlauf nach Fig. 3;
- Fig. 5: einen Temperaturverlauf mit leckagebedingter Temperaturänderung; und
- Fig. 6: den prinzipiellen Aufbau der Verlegeeinrichtung.

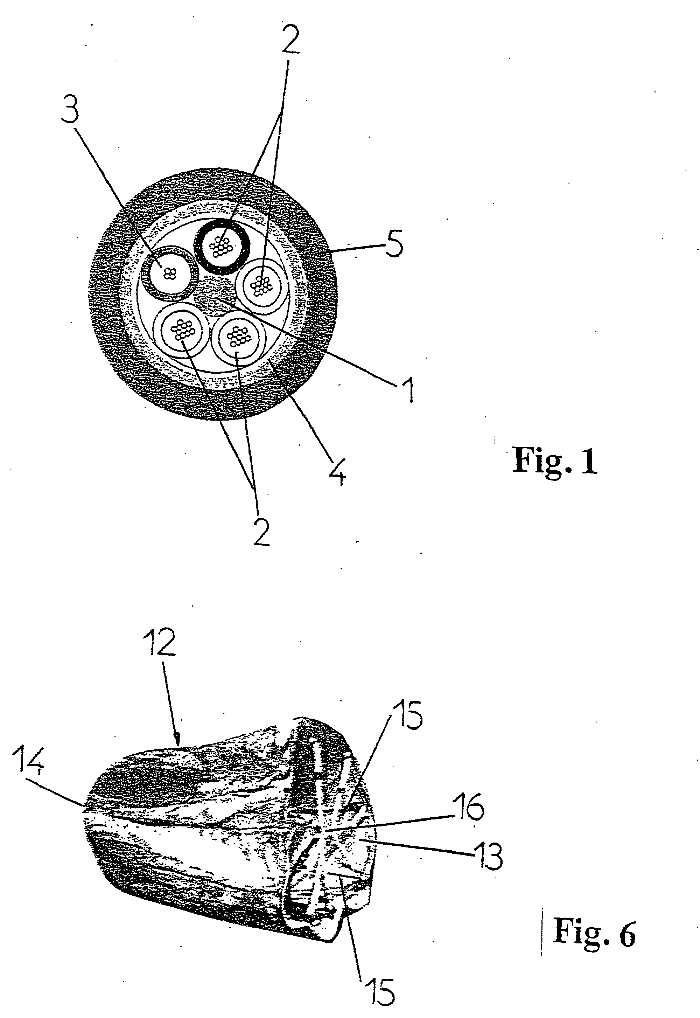

Die Verbundkabelanordnung nach Fig. 1 umfaßt ein zentral angeordnetes, metallfreies Stauch- und Zugelement 1 aus glasfaserverstärktem Kunststoff.

Durch dieses zentrale Stauch- und Zugelement 1 erlangt die Verbundanordnung eine für den Kabeleinzug notwendige Steifigkeit.

Die eigentliche Kabelseele umfaßt beim gezeigten Beispiel vier Bündeladern 2 mit einer vorgegebenen Anzahl Monomodefasern. Eine weitere Bündelader 3 weist beispielsweise vier Multimodefasern auf, welche zur Temperatursensorik auf der Basis der Erfassung rückgestreuten Laserlichts Verwendung finden.

Die Seelenhohlräume sind mit einer Dichtmasse, vorzugsweise Petrolatmasse ausgefüllt, um eine gewünschte Längswasserdichtigkeit und eine hohe Druckbeständigkeit des Kabels zu erzielen.

Die Seelenbewicklung besteht aus einem beidseitig kunststoffbeschichteten Aluminiumband 4, welches mit einer PE-Ummantelung umgeben ist, so daß ein dauerhafter Schutz gegen Einwirkung von Feststoffpartikeln in Gasströmen bzw. Feuchte- und Gaspermeation gegeben ist. Für die erforderliche mechanische Schutzwirkung weist der äußere Polyethylenmantel 5 eine hohe Dichte auf.

Das gemäß Ausführungsbeispiel vorgestellte Kabel besitzt einen Durchmesser von im wesentlichen 14 mm bei einem Gewicht von etwa 165 kg/km. Die höchstzulässige Zugbelastung liegt im Bereich von 2500 N bei einem Mindestbiegeradius unter Zugbelastung von 280 mm.

Der zulässige Temperaturbereich im Betrieb liegt zwischen -25°C bis +60°C.

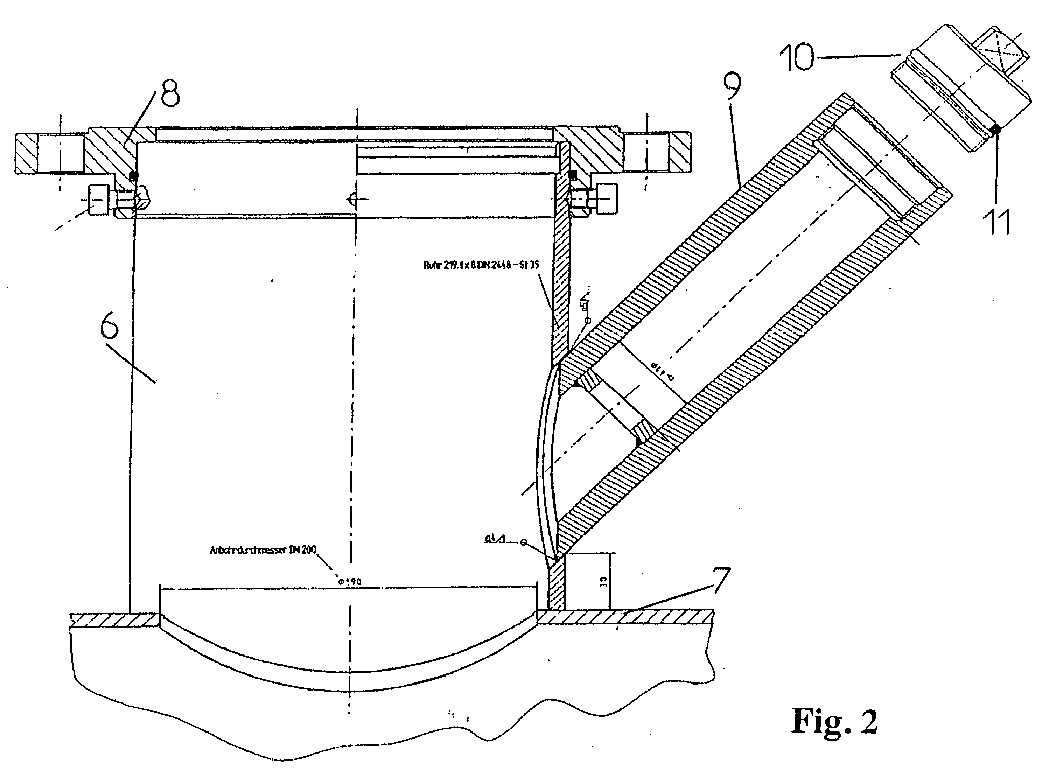

Unter Bezugnahme auf die Fig. 2 soll der Aufbau der verwendeten Ein- und Ausführstutzen näher erläutert werden.

Ein Stutzen 6 wird zunächst mit der Außenwandung des medienführenden Rohrs 7 durch Schweißen verbunden. Der Stutzen 6 besitzt einen abnehmbaren Dichtflansch 8 an seiner oberen Öffnung.

Unter einem vorgegebenen Winkel ist seitlich am Stutzen 6 ein Abgang 9 in Form eines Rohrs mit einem einschraubbaren Rohrstopfen 10 angeordnet. Der Rohrstopfen 10 umfaßt eine übliche Dichtung 11, so daß der Abgang 9 vollständig verschließbar ist, wenn das Rohr 7 durch den Stutzen 6 angebohrt wird.

Der Durchmesser des Stutzens 6 ist so gewählt, daß ein Anbohren des Rohrs 7 mit einem Durchmesser von beispielsweise der Nennweite DN 200 möglich ist.

Nach Abnehmen des Dichtflansches 8 kann im drucklosen Zustand eine spezielle Verlegeeinrichtung in das Innere des Rohrs 7 verbracht werden, wobei die Verlegeeinrichtung mit dem über den Abgang 9 zugeführten Kabel oder einem Hilfsseil verbunden wird.

Nach dem erfolgten Verlegen des Verbundkabels besteht aus Gründen der Erhöhung der Betriebssicherheit die Möglichkeit, den Stutzen 6 miteinem Rohrdeckel stoffschlüssig durch Verschweißen zu verschließen.

Die eigentliche Kabeldurchführung bzw. Kabelabdichtung ist zeichnerisch nicht dargestellt. Eine Konstruktion eines Dichtpakets aus Dichtungsmaterial, Stahlringen und hochfesten Stiftschrauben wird in den Abgang 9 eingesetzt und das Kabel durchgeführt. Die eigentliche Abdichtung erfolgt dann mechanisch durch Druckeinwirkung der Stiftschrauben auf die Stütz- und Druckringe und somit auf die Dichtung. Die Dichtfunktion wird hier durch das gleichzeitige Anpressen der Dichtungen gegen die Innenwand des Abgangs 9 und die Kabelmanteloberfläche erzielt und dauerhaft aufrechterhalten.

Bevorzugt wird als Dichtungsmaterial auf Ethylen-Propylen-Dien-Kautschuk zurückgegriffen, welcher sich durch besondere chemische Beständigkeit und hohe Temperaturwechselbelastbarkeit auszeichnet. Durch die gewählte Dichtkonstruktion erfolgt wie erwähnt ein gleichmäßiges Anpressen bezogen auf die Außenoberfläche des Verbundkabels, ohne daß unerwünschte Deformationen auftreten oder die faseroptischen Eigenschaften nachteiligt verändert werden.

Die in der Fig. 6 gezeigte Verlegeeinrichtung nach Art eines flexiblen Molchs 12 besitzt eine Schirmform mit einer Taschenöffnung 13.

Im Innern des Molchs 12 sind mehrere sich in Längsrichtung erstreckende, am Kopfende 14 verbundene Federelemente 15 angeordnet. Die Federelemente erzeugen nach außen gerichtete Vorspannkräfte, so daß mindestens Teile der Außenseite des flexiblen Molchs 12 an der Innenwandung des Rohrs anliegen.

Im Bereich der Taschenöffnung 13 sind Zugmittel 16 zum Befestigen des Verbundkabels oder eines Zugseils vorhanden.

Das Taschenmaterial bzw. die flexible Umhüllung des Molchs besteht aus Leder, Kunstleder, einem Textilgewebe oder Kunststofffolie.

Dann, wenn die Taschenöffnung 13 vom strömenden Medium beaufschlagt wird und sich aufwölbt, entsteht in Verbindung mit den Federelementen 15 eine Abdichtung gegenüber der Rohrinnenwandung und es wird unter Überwindung der Reibungskräfte die Einrichtung vom strömenden Medium im Rohrinnern in Längsrichtung fortbewegt. Die Elastizität des Molchs ermöglicht es, Durchmesseränderungen oder Änderungen des Richtungsverlaufs des Rohrs zu folgen.

Im Gegensatz zu bekannten Rohrmolchen kann der flexible Molch 12 gemäß Ausführungsbeispiel durch einen durchmesserengen Stutzen, d.h. den Aufschweißstutzen 6 in ein Rohr mit einem größeren Durchmesser verbracht werden und sich dort unter Wirkung der Federelemente 15 entspannen.

Nachdem der in der Fig. 2 gezeigte Dichtflansch 8 vom Stutzen 6 entfernt wurde, wird der flexible Molch 12 eingebracht und das Verbundkabel bzw. ein Hilfsseil unter Nutzung der Zugmittel 16 befestigt. Ergänzend besteht die Möglichkeit, am Stutzen 6 eine Führungsrolle zu befestigen, um Beschädigungen des einzuziehenden Kabels oder Seils an Schweißnähten oder scharfkantigen Abschnitten des Rohrs zu vermeiden.

Zum eigentlichen Kabeleinziehen wird ein kleinstmöglicher sperrbarer Rohrabschnitt auf einen reduzierten Betriebsdruck abgesenkt, wobei auf Einzugslänge eine Sperrung dieses Abschnitts durch Blasensetzgeräte mit an sich bekannten Doppelblasen vorgenommen wird. Über einen Ausbläser wird der abgesperrte Abschnitt drucklos gemacht. Der eingeführte flexible Molch wird nun durch Erhöhung des Gasdrucks im Bereich hinter der Taschenöffnung erhöht, so daß sich der flexible Molch im Innern des Rohrs unter Überwindung der Reibungskräfte zur Rohrinnenwandung fortbewegt.
Am Zielort kann zur Vermeidung von Beschädigungen der dort befindlichen Absperrblase eine Auffangvorrichtung für den flexiblen Molch vorgesehen sein. Der Molch wird im Bereich des Ausführstutzens vom Zugseil oder vom Verbundkabel abgekoppelt. Im Fall des Einsatzes eines Zugseils wird mit Hilfe einer Kabelziehwinde das Verbundkabel nach eingestellter Zugkraftbegrenzung bzw. Zugkraftüberwachung in das Rohrinnere verbracht und anschließend abgedichtet.

Das eingebrachte Verbundkabel wird über Kabelenddosen sowie eine Spleißdose mit Strahlung einer Laserlichtquelle impulsweise beaufschlagt. Das vom Sensorkabel bzw. Lichtwellenleiter rückgestreute Licht wird ausgekoppelt und über entsprechende Filter auf einen Detektor einer Meßeinrichtung geführt. Ein in der Einrichtung vorhandenes optisches Filter läßt Licht der Stokes-Line Is durch, während ein zweites optisches Filter Licht der Anti-Stokes-Linie Ia passieren läßt. Der Detektor erzeugt dann aus den ihm zugeführten Intensitäten Is und Ia der Stokes-Linie und der Anti-Stokes-Linie Signale, welche einer Verhältnisbildung unterzogen werden. Der hierfür eingesetzte Dividierer ist mit einem Rechner verbunden, der in Abhängigkeit von der Laufzeit des eingestrahlten Lichts und damit der Relation zur Längenkoordinate des Lichtwellenleiters Temperaturwerte bestimmt.

Mittels des Rechners können konkreten Punkten oder Orten des Lichtwellenleiters Temperaturwerte zugeordnet werden. Das Verhältnis der Intensität der Stokes-Linien zueinander bestimmt dabei den jeweiligen Temperaturwert, während die Längenkoordinaten des Lichtwellenleiters aus der Laufzeit des rückgestreuten Lichtimpulses ermittelt werden.

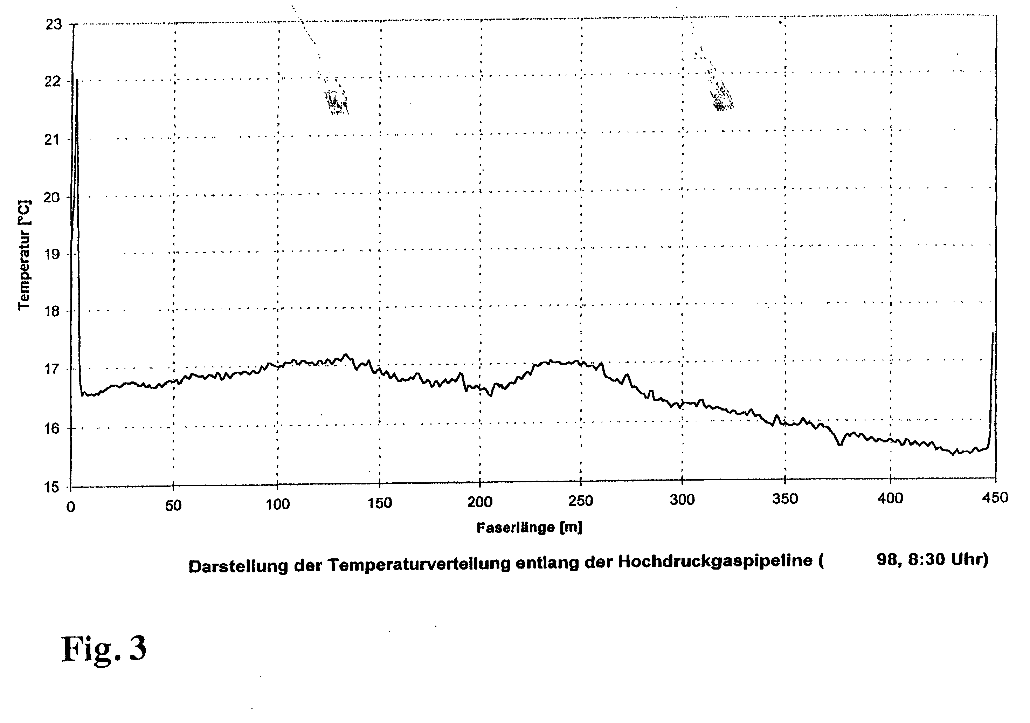

Die Fig. 3 zeigt nun den Ausgangszustand der Temperaturverteilung entlang einer beispielsweisen Hochdruck-Gaspipeline. Hier ist erkennbar, daß die Temperatur entlang des vermessenen Abschnitts der Pipeline nicht konstant ist.
Die Analyse der Temperaturdaten gemäß Ausführungsbeispiel ergab, daß die Temperatur am Ort des Sensorkabels vom Temperatur-Tagesgang beeinflußt wird. Die vorhandene Inhomogenität der Überdeckung der Hochdruck-Gaspipeline führt zu den erkennbaren Temperaturunterschieden im Bereich von Meter 7 bis Meter 447 entlang der Trasse.

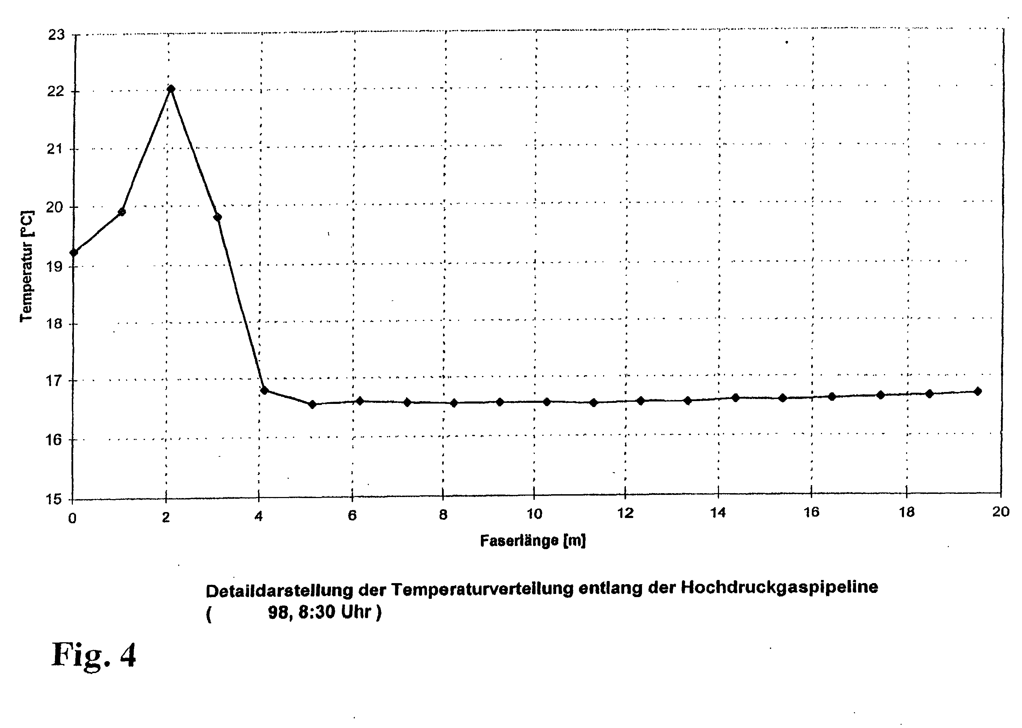

Die Fig. 4 zeigt eine Detaildarstellung der Temperaturverteilung der ersten 20 Trassenmeter nach Fig. 3. Bei dem Punkt 2 m ist eine Temperaturerhöhung erkennbar. In diesem Bereich wurde kurz vor der Durchführung der Messungen nach Ausführungsbeispiel die Schwarzdecke instand gesetzt. Die damit verbundene Erwärmung des Erdreichs ist zum Zeitpunkt der Temperaturmessung noch nicht abgeklungen und deutlich nachweisbar.

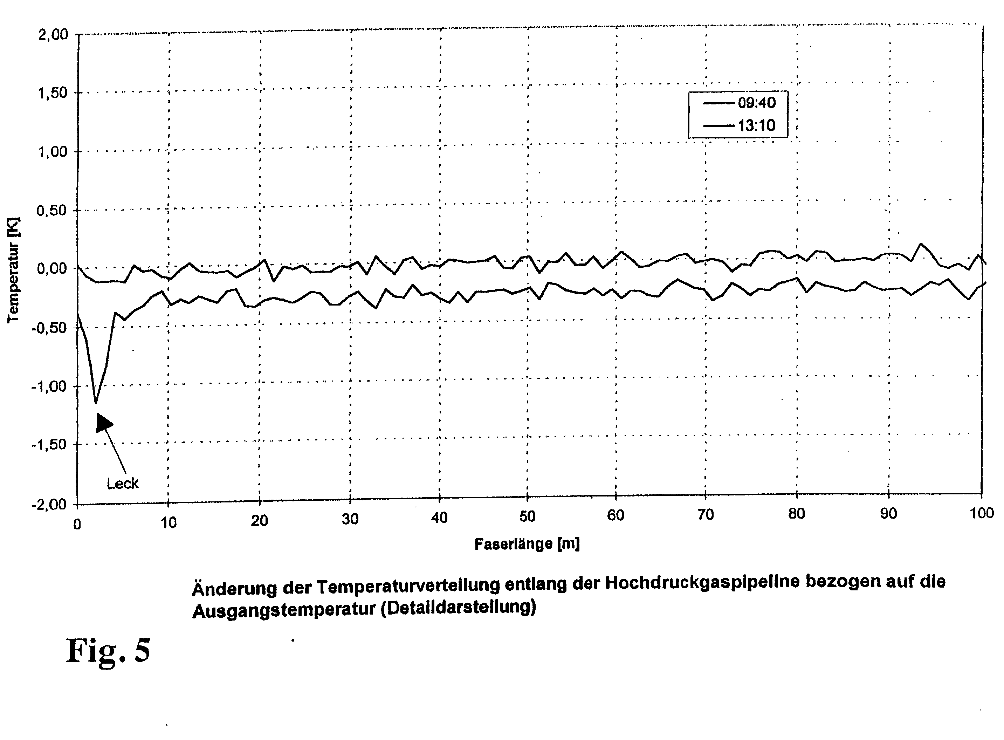

Fig. 5 läßt eine leckagebedingte Temperaturänderung entlang der Hochdruck-Gaspipeline zu verschiedenen Zeitpunkten erkennen.

Beim Beispiel wurde um 8.45 Uhr ein Leck geöffnet. Um ca. 9.40 Uhr (obere Kurve) konnte noch keine signifikante Temperaturabsenkung festgestellt werden. Gegem 13.10 Uhr (untere Kurve) erfolgt jedoch eine deutliche Temperaturabsenkung um 1,1 K. Die Lage des Lecks wurde am Punkt 2 m geortet.

Es wurde demnach die Änderung der Temperaturverteilung während der Lecksimulation deutlich nachgewiesen, wobei die zeitliche Verzögerung durch die Wärmeausbreitungsbedingungen und die Wärmekapazität des Verbundkabels bedingt ist. Die lokale Abkühlung durch Entspannung des unter Hochdruck befindlichen Gases am Leck und die sich ausbreitende Temperaturänderungsfront kann mit der beschriebenen Vorrichtung sicher nachgewiesen werden, so daß zukünftig in kostengünstige Weise die Überwachung von Gastransporteinrichtungen mittels faseroptischer Sensorik, die Bestandteile des Verbundkabels zur Nachrichtenübertragung sind, durchführbar ist. Im Vergleich zur konventionellen Technologie der Erdverlegung mit Schutzrohr werden Kostensenkungen realisierbar, wobei Tiefbauarbeiten im wesentlichen nur für die Abschnitte zum Kabelein- und -ausführen am Gasrohr anfallen.

## Patentansprüche

1. Vorrichtung zum Überwachen des Zustands von Rohren, Rohrsystemen, Pipelines oder dergleichen Gas oder flüssige Medien führenden Einrichtungen, wobei die Medien unter hohem Druck stehen, sowie zur Nachrichtenübertragung oder Telekommunikation, umfassend
- mindestens ein faseroptisches, mit Laserlicht beaufschlagtes Multimode-Lichtwellenleiter-Sensorkabel und Mittel zur Laufzeit- und Intensitätsauswertung des rückgestreuten Laserlichts, um örtliche Temperaturanomalien längs des Sensorkabels zu bestimmen, sowie
- mindestens ein Monomode-Lichtwellenleiterkabel zur Nachrichtenübertragung, wobei die Kabel eine ummantelte Verbundanordnung mit Stauch- und Zugelement (1) bilden, und
- wobei die Kabel-Verbundanordnung über druckdichte Ein- und Ausführstutzen (6) überwiegend im Innern der Rohre oder des Rohrsystems verlegt ist.

2. Vorrichtung nach Anspruch 1, wobei
die Kabel-Verbundanordnung mindestens eine Bündelader mit Multimodefasern (3) sowie mehrere Bündeladern mit einer Vielzahl von Monomodefasern (2) aufweist, welche um das zentrale Stauch- und Zugelement (1) befindlich und mit einer Seelenwicklung und einem Mantel umgeben angeordnet sind.

3. Vorrichtung nach Anspruch 2, wobei
der Mantel (5) aus einem kunststoffbeschichteten Metallband (4) besteht.

4. Vorrichtung nach Anspruch 3, wobei
die Kunststoffbeschichtung Polyethylen (5) und das metallische Material Aluminium (4) ist.

5. Vorrichtung nach einem der vorangegangenen Ansprüche, wobei
das Stauch- und Zugelement (1) aus glasfaserverstärktem Kunststoff (GFK) besteht.

6. Vorrichtung nach einem der vorangegangenen Ansprüche, wobei
die Ein- und Ausführstutzen (6) je einen sich bezogen auf die Rohrlängsrichtung im wesentlichen senkrecht hierzu erstreckenden Aufschweißstutzen aufweisen, welche einen seitlichen Abgang (9) zur Verbundkabelführung umfassen, wobei der Aufschweißstutzendurchmesser zum Ein- und Ausbringen einer Verlegeeinrichtung geeignet gewählt und der Querschnitt oder Durchmesser des seitlichen Abgangs (9) am Kabeldurchmesser und den Dichtmitteln orientiert ist.

7. Vorrichtung nach Anspruch 6, wobei
der seitliche Abgang (9) mindestens eine auf Verbundkabel und Abgangsinnenwandung durch Einspannung resultierende, axial gerichtete Kräfte erzeugende elastische Dichtung (11) aufweist.

8. Verfahren zum Verlegen einer Kabel-Verbundanordnung zur Herstellung einer Vorrichtung zum Überwachen des Zustands von Rohren, Rohrsystemen, Pipelines oder dergleichen nach einem der Ansprüche 1 bis 7 mit folgenden Schritten:
- Freilegen von mindestens zwei Rohrabschnitten;
- Befestigen der Aufschweißstutzen im Bereich der freigelegten Rohrabschnitte;
- Senken des Betriebsdrucks im Rohr bzw. Rohrsystem, Sperren des Rohrs auf der Verbundkabel-Einzugslänge, Ausblasen und Drucklosmachen des abgesperrten Rohrabschnitts;
- Anbohren des Rohrs über die Aufschweißstutzen;
- Einführen der Verlegeeinrichtung über die Öffnung des Aufschweißstutzens;
- Verbinden der Verlegeeinrichtung mit dem Verbundkabel oder einem Zugseil, welches über den seitlichen Abgang zugeführt wird;
- vorläufiges Abdichten der Aufschweißstutzen;
- Erhöhen des Betriebsdrucks im Rohr zur Steuerung der Einzugsgeschwindigkeit, wobei die Verlegeeinrichtung vom strömenden Medium mitgenommen wird;
- Ausführen des Kabels oder des Zugseils und Entnahme der Verlegeeinrichtung; sowie
- endgültiges Abdichten der Aufschweißstutzen und der seitlichen Abgänge nach erfolgter Kabeldurchführung.

9. Verfahren nach Anspruch 8,
**dadurch gekennzeichnet, daß**
das vorläufige Abdichten der Aufschweißstutzen mittels Blindflansch und das endgültige Abdichten durch Verschweißen mit einem Rohrdeckel erfolgt.

10. Verfahren nach Anspruch 8,
**dadurch gekennzeichnet, daß**
das Einziehen des Verbundkabels mittelbar über ein Hilfsseil vorgenommen wird, wobei das Einziehen mittels einer Kabelziehwinde unter Überwachung der Zugkraft sowie bei eingestellter Zugkraftbegrenzung erfolgt.

11. Verwendung einer Einrichtung zum Verlegen einer Kabel-Verbundanordnung zur Herstellung einer Vorrichtung nach einem der Ansprüche 1 bis 7, wobei
eine flexible, schirmförmige Tasche mit im Innern sich in Längsrichtung erstreckend angeordneten Federelementen (15) vorgesehen ist, wobei die Federelemente (15) radiale, nach außen gerichtete Vorspannkräfte erzeugen, so daß mindestens Teile der Außenseite der Tasche an der Rohrinnenwandung anliegen, und wobei die Tasche Zugmittel (16) aufweist.

12. Verwendung nach Anspruch 11, wobei
das Taschenmaterial Leder, Kunstleder, Textilgewebe oder Kunststoffolie ist.

13. Verwendung nach Anspruch 11 oder 12, wobei
die offene Taschenseite (13) vom strömenden Medium beaufschlagt sich aufwölbt und gegenüber der Rohrinnenwandung abdichtend wirkt, wobei unter Überwindung der Reibungskräfte die Einrichtung sich vom Druck des strömenden Mediums abhängig auch bei Durchmesseränderungen des Rohrs im Rohrinnern in Längsrichtung fortbewegt.

## Claims

1. A device for monitoring the state of pipes, pipe systems, pipelines or similar devices conveying gas or fluid media, wherein the media are under high pressure, and for news transmission or telecommunications, comprising
- at least one fibre-optic multi-mode light-wave-conductor sensor cable acted upon with laser light, and means for evaluating the running time and intensity of the backscattered laser light in order to determine local temperature anomalies along the sensor cable, and
- at least one monomode light-wave conductor cable for news transmission, wherein the cables form a sheathed composite arrangement with a compression and traction element (1), and
- wherein the composite arrangement of the cable is installed predominantly in the interior of the pipes or the pipe system by way of pressure-tight sockets (6) leading in and out.

2. A device according to Claim 1, wherein
the composite arrangement of the cable has at least one bunched wire with multi-mode fibres (3) and a plurality of bunched wires with a plurality of monomode fibres (2) which are arranged situated around the central compression and traction element (1) and surrounded by a core winding and a sheath.

3. A device according to Claim 2, wherein
the sheath (5) consists of a metal strip (4) coated with plastics material.

4. A device according to Claim 3, wherein
the coating of plastics material is polyethylene (5) and the metallic material is aluminium (4).

5. A device according to one of the preceding Claims, wherein
the compression and traction element (1) consists of glass-fibre-reinforced plastics material.

6. A device according to one of the preceding Claims, wherein
the sockets (6) leading in and out each have a respective welded-on socket which extends substantially at a right angle thereto with respect to the longitudinal direction of the pipe and which comprises a lateral outlet (9) to the composite cable guide, wherein the diameter of the welded-on socket is selected so as to be suitable for moving an installation device in and out and the cross-section or diameter of the lateral outlet (9) is adapted to the cable diameter and the sealing means.

7. A device according to Claim 6, wherein
the lateral outlet (9) has at least one resilient seal (11) producing forces directed axially and resulting from clamping on the composite cable and the inner wall of the outlet.

8. A method of installing a composite cable arrangement for producing a device for monitoring the state of pipes, pipe systems, pipelines or the like according to one of Claims 1 to 7, with the following steps:
- exposing at least two pipe sections;
- fastening the welded-on sockets in the region of the exposed pipe sections;
- lowering the operating pressure in the pipe or pipe system, blocking the pipe at the draw-in length of the composite cable, blowing out and de-pressurizing the blocked-off pipe section;
- drilling the pipe by way of the welded-on socket;
- inserting the installation device by way of the opening in the welded-on socket;
- connecting the installation device to the composite cable or a traction rope which is supplied by way of the lateral outlet;
- provisionally sealing the welded-on sockets;
- increasing the operating pressure in the pipe in order to control the draw-in speed, the installation device being entrained by the flowing medium;
- guiding the cable or the traction rope out and removing the installation device, and
- finally sealing the welded-on sockets and the lateral outlets after the cable has been passed through.

9. A method according to Claim 8, **characterized in that** the provisional sealing of the welded-on sockets takes place by means of a dummy flange and the final sealing takes place by welding to a pipe cover.

10. A method according to Claim 8, **characterized in that** the drawing-in of the composite cable is carried out indirectly by way of an auxiliary rope, the drawing-in taking place by means of a cable winch whilst monitoring the traction force and with the traction-force limit set.

11. Use of a device for installing a composite cable arrangement for producing a device according to one of Claims 1 to 7, wherein
a flexible, screen-shaped pocket with spring elements (15) arranged extending in the longitudinal direction in the interior is provided, wherein the spring elements (15) produce radial, outwardly directed pre-tensioning forces, so that at least parts of the outside of the pocket rest against the inner wall of the pipe, and wherein the pocket has traction means (16).

12. The use according to Claim 11, wherein
the pocket material is leather, artificial leather, textile fabric or plastics-material film.

13. The use according to Claim 11 or 12, wherein
the open pocket side (13), acted upon by the flowing medium, bulges and acts in a sealing manner with respect to the inner wall of the pipe, wherein the device continues to move in the longitudinal direction in the interior of the pipe as a function of the pressure of the flowing medium even in the case of changes in the diameter of the pipe whilst overcoming the frictional forces.

## Revendications

1. Dispositif pour le contrôle de l'état des tubes, systèmes de tuyauterie, pipelines ou dispositifs analogues transportant des fluides gazeux ou liquides, les fluides étant sous haute pression, ainsi que pour la transmission d'informations ou pour la télécommunication, comprenant
- au moins un câble sensoriel guide d'ondes multimodal à fibres optiques, sollicité par une lumière à laser, et des moyens destinés à analyser le temps et l'intensité de rétrodiffusion de la lumière à laser, afin de déterminer des anomalies de température locales le long du câble sensoriel, ainsi que
- au moins un câble guide d'ondes monomodal destiné à la transmission d'informations, les câbles formant un système multicouche enrobé muni d'un élément de compression et de traction (1), et
- le système de câbles multicouches étant posé principalement à l'intérieur des tubes ou du système de tuyauterie par l'intermédiaire de tubulures d'entrée et de sortie (6) étanches à la pression.

2. Dispositif selon la revendication 1, dans lequel le système de câbles multicouches comporte au moins un faisceau de fibres avec des fibres multimodales (3), ainsi que plusieurs faisceaux de fibres avec une pluralité de fibres monomodales (2), qui sont disposés concentriquement à l'élément de compression et de traction (1) central et sont entourés par un bandage des conducteurs et une gaine.

3. Dispositif selon la revendication 2, dans lequel la gaine (5) est formée par une bande métallique (4) revêtue de matière plastique.

4. Dispositif selon la revendication 3, dans lequel le revêtement en matière plastique est un polyéthylène (5) et le matériau métallique est de l'aluminium (4).

5. Dispositif selon l'une des revendications précédentes, dans lequel l'élément de compression et de traction (1) est réalisé en matière plastique renforcée par des fibres de verre.

6. Dispositif selon l'une des revendications précédentes, dans lequel les tubulures d'entrée et de sortie (6) comportent chacune des manchons soudés, sensiblement perpendiculaires à la direction longitudinale du tube, qui sont munis d'une sortie latérale (9) vers le dispositif de guidage des câbles multicouches, le diamètre du manchon soudé étant choisi de manière à pouvoir y introduire et en extraire un dispositif de pose et la section ou le diamètre de la sortie latérale (9) étant choisi en fonction du diamètre des câbles et des moyens d'étanchéité.

7. Dispositif selon la revendication 6, dans lequel la sortie latérale (9) comporte au moins une garniture d'étanchéité (11) élastique générant des forces orientées axialement et résultant d'une contrainte exercée sur les câbles multicouches et la paroi intérieure de la sortie.

8. Procédé pour poser un système de câbles multicouches en vue de réaliser un dispositif pour le contrôle de l'état des tubes, systèmes de tuyauterie, pipelines ou dispositifs analogues selon l'une des revendications 1 à 7, comprenant les étapes suivantes :
- dégagement d'au moins deux tronçons de tube ;
- fixation des manchons soudés dans la zone des tronçons de tube dégagés ;
- baisse de la pression de service dans le tube ou le système de tuyauterie, obturation du tube sur la longueur d'introduction du câble multicouche, évacuation de l'air et suppression de la pression dans le tronçon de tube obturé ;
- perçage du tube par l'intermédiaire des manchons soudés ;
- introduction du dispositif de pose par l'intermédiaire de l'orifice du manchon soudé ;
- assemblage du dispositif de pose avec le câble multicouche ou un câble de traction, qui est introduit par la sortie latérale ;
- étanchéification provisoire du manchon soudé ;
- augmentation de la pression de service dans le tube pour commander la vitesse d'introduction, le dispositif de pose étant entraîné par le milieu affluant ;
- extraction du câble ou du câble de traction et retrait du dispositif de pose ; ainsi que
- étanchéification définitive des manchons soudés et des sorties latérales après réalisation du passage du câble.

9. Procédé selon la revendication 8, dans lequel le manchon soudé est rendu étanche provisoirement au moyen d'une bride d'obturation et est rendu étanche définitivement par le soudage d'un couvercle de tube.

10. Procédé selon la revendication 8, dans lequel le câble multicouche est inséré indirectement au moyen d'un câble auxiliaire, l'insertion du câble étant effectuée au moyen d'un treuil pour câble, sous surveillance de la force de traction, ainsi que par réglage de la limitation de la force de traction.

11. Utilisation d'un dispositif destiné à poser un système de câbles multicouches pour la réalisation d'un dispositif selon l'une des revendications 1 à 7, dans laquelle des éléments à ressort (15) sont prévus dans une poche flexible en forme de parapluie en s'étendant à l'intérieur de celle-ci dans le sens longitudinal, les éléments à ressort (15) générant des forces de précontrainte radiales, orientées vers l'extérieur, de telle sorte qu'au moins des parties de la face extérieure de la poche viennent en appui contre la paroi intérieure du tube, la poche étant munie de moyens de traction (16).

12. Utilisation selon la revendication 11, dans laquelle la poche est réalisée dans un matériau tel que le cuir, le cuir synthétique, un textile ou une feuille de matière plastique.

13. Utilisation selon la revendication 11 ou 12, dans laquelle le côté ouvert (13) de la poche, sollicité par le milieu affluant, se dilate et agit de manière étanche par rapport à la paroi intérieure du tube, le dispositif en maîtrisant les forces de frottement pouvant se déplacer à l'intérieur du tube dans le sens longitudinal en fonction de la pression du milieu affluant, même en cas de variations du diamètre du tube.
